Europäisches Patentamt

European Patent Office

Office européen des brevets

(11) Numéro de publication: **0 420 718 A1**

## (12) DEMANDE DE BREVET EUROPEEN

(21) Numéro de dépôt: 90402563.2

(22) Date de dépôt: 18.09.90

(51) Int. Cl.5: **C01B 21/06**, C01B 21/068, C01B 21/076

(30) Priorité: 27.09.89 FR 8912634

(43) Date de publication de la demande:
03.04.91 Bulletin 91/14

(84) Etats contractants désignés:
AT BE CH DE DK ES FR GB GR IT LI LU NL SE

(71) Demandeur: **RHONE-POULENC CHIMIE**
**25, quai Paul Doumer**
**F-92408 Courbevoie Cédex(FR)**

(72) Inventeur: **Dubois, Bertrand**
**1, allée des Sycomores**
**F-45100 Orléans(FR)**
Inventeur: **Odier, Philippe**
**107, rue du Désert**
**F-45560 Saint Denis en Aval(FR)**

(74) Mandataire: **Dubruc, Philippe et al**
**RHONE-POULENC CHIMIE Service Brevets**
**Chimie 25, quai Paul-Doumer**
**F-92408 Courbevoie Cédex(FR)**

(54) Procédé de préparation de nitrures métalliques.

(57) La présente invention concerne un procédé de préparation d'un nitrure métallique par exemple $Si_3N_4$ ou TiN.

Ce procédé est caractérisé en ce qu'on qu'on forme en (6) un aérosol d'un halogénure métallique, en ce qu'on fait réagir (en 5) cet aérosol avec de l'ammoniac (12) et en ce qu'on fait subir (en 3) un traitement thermique au produit de réaction.

# PROCEDE DE PREPARATION DE NITRURES METALLIQUES

La présente invention concerne un procédé de préparation de nitrures métalliques.

On sait que les nitrures métalliques sont des matériaux très intéressants par leur résistance à la chaleur. Ainsi, le nitrure de silicium est un matériau utilisé dans des applications thermo-mécaniques dans l'industrie automobile ou aéronautique par exemple, compte tenu de sa tenue exceptionnelle aux chocs thermiques associée à sa tenacité élevée.

Plusieurs procédés de préparation des nitrures métalliques existent déjà. On peut mentionner plus particulièrement ceux dans lesquels on fait réagir un halogénure du métal concerné avec de l'ammoniac à température ambiante ou plus basse. On obtient ainsi des amides ou imides métalliques qui sont portés à haute température dans une atmosphère d'azote ou d'ammoniac.

Toutefois, de tels procédés présentent une mise en oeuvre délicate. En effet, le contrôle de la réaction est souvent difficile.

Par ailleurs, la granulométrie du produit final est mal contrôlée.

Enfin, l'emploi d'ammoniac liquide peut entraîner des coûts élevés.

L'objet de l'invention est donc la mise au point d'un procédé plus simple, moins coûteux dans sa mise en oeuvre et permettant de contrôler la granulométrie.

Dans ce but, le procédé selon l'invention de préparation de nitrure métallique est caractérisé en ce qu'on forme un aérosol d'un halogénure métallique, en ce qu'on fait réagir cet aérosol avec de l'ammoniac et en ce qu'on fait subir un traitement thermique au produit de réaction.

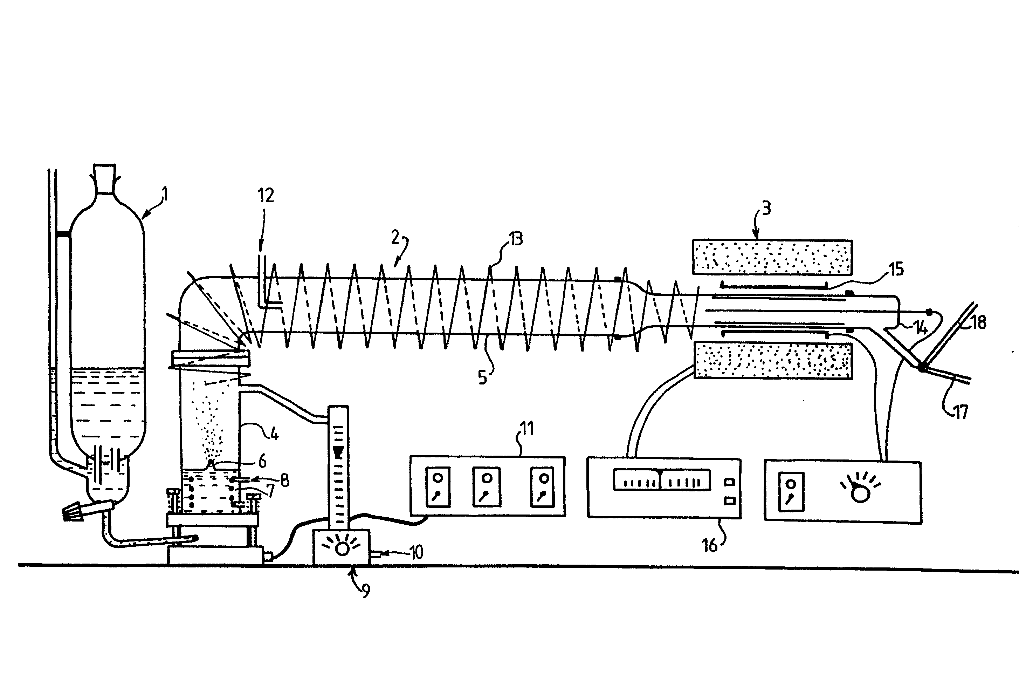

D'autres détails et caractéristiques de l'invention seront mieux compris à la lecture de la description faite en référence au dessin annexé pour lequel :

- la figure unique représente une installation pour la mise en oeuvre du procédé de l'invention.

Il est à noter tout d'abord que l'invention s'applique à la préparation de nitrures métalliques et notamment à la préparation de nitrures d'éléments choisis dans les groupes III, IV et V de la classification périodique.

A titre d'exemple, l'invention s'applique particulièrement bien à la préparation de $Si_3N_4$, BN et TiN.

Selon la caractéristique principale de l'invention, on forme tout d'abord un aérosol d'un halogénure métallique.

On entend ici et pour toute la description par aérosol, tout système de fines gouttelettes en dispersion dans un gaz.

La phase liquide de cet aérosol comprend l'halogénure métallique correspondant au nitrure métallique que l'on cherche à préparer. Généralement, il s'agit d'un chlorure, par exemple de tétrachlorure de silicium $SiCl_4$, de chlorure de bore $BICl_3$ ou de titane $TiCl_4$.

Il est préférable, afin d'éviter les réactions gaz-gaz entre les produits précurseurs de refroidir l'halogénure à une température fonction de la tension de vapeur du produit par exemple entre 0 et -40° C.

La phase gazeuse constituant l'aérosol est un gaz neutre. Ce peut être par exemple l'azote, l'argon, l'hydrogène ou un mélange de ces gaz. Ce gaz peut aussi servir de gaz vecteur.

L'aérosol peut être obtenu d'une manière classique par atomisation de l'halogénure au moyen de tout pulvérisateur convenable, par exemple par une buse d'atomisation du type pomme d'arrosoir, ou par atomiseur à turbine ou à disque rotatif.

Cependant, on préfère utiliser les atomiseurs pneumatiques ou ultrasoniques.

Ce dernier type d'atomiseur est en effet particulièrement bien adapté pour réaliser de manière parfaitement reproductible des aérosols constitués de très fines gouttelettes sphériques homogènes en taille.

Ce type d'atomiseur est décrit notamment par R.J. LANG dans un article intitulé "Ultrasonic Atomisation of Liquids" (J. ACOUST Soc. Am., Vol 34, n° 1, page 6-8, 1962).

Selon l'invention, le diamètre moyen des gouttelettes de l'aérosol peut être compris entre 0,5 micron et 10 microns et plus particulièrement entre 1 et 5μm. Comme indiqué dans l'article précité, on règle la taille moyenne desdites gouttelettes en jouant indépendamment ou simultanément sur la fréquence d'exitation du nébuliseur et/ou la densité du liquide et/ou sa tension superficielle.

Une fois l'aérosol formé, on le fait réagir avec de l'ammoniac dans une deuxième étape du procédé de l'invention.

L'ammoniac est utilisé sous forme gazeuse. Il est injecté par exemple dans un réacteur dans lequel est introduit l'aérosol.

La troisième étape du procédé de l'invention est un traitement thermique.

Il est à noter que selon une première variante de l'invention, ce traitement thermique peut se faire en deux temps :

Le premier se déroule immédiatement après la mise en contact de l'ammoniac et de l'halogénure de silicium. Il consiste à faire subir au produit de réaction, issu de la mise en contact précitée, une montée en température entre la température ambiante et 400°C environ. En pratique, ce traitement peut être réalisé dans un réacteur tubulaire présentant le gradient nécessaire de température. L'aérosol et l'ammoniac sont mis en contact à une entrée du réacteur et le mélange réactionnel est entraîné vers l'autre extrémité du réacteur, la température dans le réacteur augmentant dans le sens du déplacement du milieu réactionnel.

A l'issue de ce premier traitement, on recueille une poudre à base essentiellement de diimide métallique par exemple de diimide de silicium Si(NH)$_2$. Ce premier traitement permet aussi l'élimination de l'halogénure d'ammonium par exemple NH$_4$Cl.

Dans un deuxième temps, on poursuit le traitement thermique à des températures plus élevées par exemple dans un four, cette deuxième étape du traitement permettant de passer du diimide au nitrure.

La seconde partie de ce traitement se fait en montant la température entre 400°C et 1000°C. Une fois cette dernière température atteinte, on reste en palier pendant une durée fonction du précurseur utilisé et de l'appareillage par exemple entre 1 et 3 heures.

On notera que pour au moins une des deux étapes constituant le traitement thermique, on travaille de préférence sous un gaz neutre du même type que celui mentionné plus haut. On pourrait utiliser aussi l'ammoniac.

A l'issue de cette seconde partie du traitement, on recueille nitrure métallique sous forme d'une poudre.

Dans une seconde variante, il est possible de réaliser en une seule étape le traitement thermique en deux temps qui vient d'être décrit ci-dessus, en faisant circuler le produit dans un réacteur, par exemple à passage, permettant une élévation de température entre 400 et 1500°C.

Enfin, il est possible d'ajouter au procédé de l'invention une dernière étape de calcination du nitrure métallique formé. Cette calcination a pour but de stabiliser le produit et d'éliminer éventuellement quelques impuretés. Cette calcination se fait habituellement à des températures comprises entre 1000 et 1600°C de préférence sous azote ou argon.

On notera que le procédé qui vient d'être décrit peut être réalisé en continu ou en discontinu. Dans le cas d'un procédé en discontinu, le produit (diimide) issu de la première partie du traitement thermique peut être ensuite stocké dans un four maintenu à 400°C jusqu'à ce qu'on obtienne une quantité suffisante de produit dans le four. Une fois cette quantité atteinte, on procède alors à la deuxième phase du traitement thermique.

Un dispositif de mise en oeuvre du procédé de l'invention va être décrit plus particulièrement ci-dessous. La description est faite pour le cas du nitrure de silicium mais bien entendu ce dispositif pourrait être utilisé pour la préparation d'un autre nitrure.

Le dispositif comprend essentiellement des moyens d'alimentation 1 en halogénure de silicium, un réacteur 2 et un four 3.

Les moyens d'alimentation 1 sont constitués essentiellement par un réservoir à niveau constant contenant SiCl$_4$ par exemple.

Le réacteur 2 est un réacteur tubulaire se présentant sous la forme d'un tube coudé comprenant une partie verticale 4 et une partie horizontale 5 qui constitue la zone de réaction proprement dite.

A la base de la partie 4 du réacteur 2, est installé un nébuliseur 6 muni d'un serpentin 7, alimenté en 8, par un fluide cryogénique.

Le nébuliseur est complété par un débimètre 9 réglant le débit d'azote 10, le fonctionnement de l'ensemble étant réglé par des moyens de contrôle 11.

La partie 5 du réacteur est munie d'une entrée d'ammoniac 12 pourvue d'un débimètre. Le réacteur est par ailleurs équipé d'une résistance chauffante électrique 13.

L'extrémité 14 de la partie 5 du réacteur est placée dans le four 3. Ce four est muni d'un électrofiltre 15. Le fonctionnement du four est contrôlé par un ensemble 16.

Enfin, l'extrémité 14 est munie d'une sortie 17 et d'une liaison 18 à une pompe à vide.

Le fonctionnement du dispositif est le suivant :

On fait tout d'abord par 18 un vide primaire dans l'installation pour éviter toutes traces de vapeur d'eau et d'oxygène. On refroidit SiCl$_4$ à -30°C par le liquide cryogénique introduit en 8. Le nébuliseur est mis en marche. On forme en 4 par atomisation un brouillard de SiCl$_4$ entraîné par le gaz vecteur. On injecte l'ammoniac en 12 de sorte que la réaction d'ammoniolyse entre SiCl$_4$ et NH$_3$ se produit au début de 5 en donnant des particules de diimide de silicium. Compte tenu de la résistance 13, la température dans le réacteur varie entre 20°C vers le haut de la partie 4 et 400°C dans la partie du réacteur immédiatement avant l'entrée du four 3.

Les particules de diimide sont recueillies à l'aide de l'électrofiltre 15. Lorsque la quantité de produit est suffisante, on fait monter le four en température jusqu'à 1000°C sous flux d'azote.

Deux exemples non limitatifs vont maintenant être donnés.

EXEMPLE 1

Cet exemple décrit la préparation de nitrure de silicium.

On utilise le dispositif décrit ci-dessus et dans les mêmes conditions avec en outre les conditions supplémentaires suivantes :
- débit de $N_2$ : 650 l/h
- débit de $NH_3$ : 300 l/h
- durée de la nébulisation : 5 minutes
- quantité de $SiCl_4$ nébulisé: 10 ml (0,087 mole)
- rapport molaire $NH_3/SiCl_4$ : 12

L'ammoniolyse s'effectue très rapidement. On obtient une poudre blanche. La décomposition thermique sous $N_2$ jusqu'à 1000°C avec un palier de 3 heures mène à une poudre qui est ensuite calcinée à 1550°C pendant 3 heures. On obtient une poudre grise cristallisée constituée essentiellement de $\alpha\text{-}Si_3N_4$ sous forme de particules équiaxes de granulométrie de l'ordre du micron.

## EXEMPLE 2

Cet exemple décrit la préparation du niture de titane.

Le même dispositif est utilisé en remplaçant le $SiCl_4$ par du $TiCl_4$ avec les conditions suivantes :
- débit de $N_2$ : 150 l/h
- débit de $NH_3$ : 300 l/h
- durée de nébulisation : 8 minutes
- quantité de $TiCl_4$ nébullisée : 16 ml (0,15 mole)
- Rapport molaire $NH_3/TiCl_4$ : 11,5

Le $TiCl_4$ est préalablement refroidi à 0°C.

L'ammoniolyse s'effectue très rapidement. La poudre résultante est ensuite recuite 3 heures à 1025°C sous balayage de $NH_3$. Le spectre de R.X. de la poudre obtenue, après ammoniolyse, est caractéristique de TiN qui cristallise dans le système cubique. Le tube, dans lequel s'est effectué le recuit est recouvert d'une fine pellicule dorée de TiN. L'observation au microscope électronique à balayage de la poudre montre que la taille des agglomérats est comprise entre 0,1$\mu$m et 2$\mu$m.

## Revendications

1 - Procédé de préparation d'un nitrure métallique, caractérisé en ce qu'on forme un aérosol d'un halogénure métallique, en ce qu'on fait réagir cet aérosol avec de l'ammoniac et en ce qu'on fait subir un traitement thermique au produit de réaction.

2 - Procédé selon la revendication 1 caractérisé en ce qu'on utilise comme halogénure un halogénure d'un élément choisi dans les groupes III, IV et V de la classification périodique.

3 - Procédé selon la revendication 2 caractérisé en ce qu'on utilise comme halogénure un chlorure 4 - Procédé selon l'une des revendications précédentes, caractérisé en ce qu'on forme un aérosol dont la phase gazeuse est un gaz neutre, notamment l'azote, l'argon, l'hydrogène ou leurs mélanges.

5 - Procédé selon l'une des revendications précédentes, caractérisé en ce qu'on réalise le traitement thermique en deux étapes, la première comprenant une montée en température jusqu'à 400°C, la seconde comprenant une montée en température entre 400°C et 1000°C.

6 - Procédé selon la revendication 5, caractérisé en ce qu'on réalise le traitement thermique sous un gaz neutre pour au moins une des étapes précitées.

7 - Procédé selon l'une des revendications précédentes, caractérisé en ce qu'il comprend en outre, après le traitement thermique, une étape de calcination.

8 - Procédé selon la revendication 7, caractérisé, en ce qu'on réalise l'étape de calcination à une température comprise entre 1400 et 1600°C.

9 - Procédé selon la revendication 7 ou 8, caractérisé en qu'on réalise l'étape de calcination sous azote ou argon.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN vol. 7, no. 185 (C-181)(1330) 13 août 1983, & JP-A-58 091018 (DENKI KAGAKU) 30 mai 1983, * le document en entier * | 1-7 | C 01 B 21/06 C 01 B 21/068 C 01 B 21/076 |
| A | CHEMICAL ABSTRACTS, vol. 101, no. 12, septembre 1984 Columbus, Ohio, USA NIPPON MINING: "Fine titanium nitride." page 154; colonne de droite; ref. no. 93731F * abrégé * | 1,2 | |
| A | US-A-4 405 589   (IWAI ET AL.) * revendications 1,3; exemple 3 * | 1,3 | |
| A | US-A-4 671 906   (YASUE ET AL.) * colonne 5, lignes 32 - 33; revendications 1-3; figure 1 * | 1 | |
| A | FR-A-2 418 276   (INST. PO METALOSNANIE I TECHN. NA METALITE) * revendications 1-8; figure 1 * | 1 | |
| D,A | J. Acoust. Soc. Am. vol. 34, no. 1, janvier 1962, pages 6 - 8; R.J. Lang: "Ultrasonic Atomization of Liquids" * le document en entier * | 1 | **DOMAINES TECHNIQUES RECHERCHES (Int. Cl.5)** C 01 B B 01 J |
| A | US-A-3 959 446   (MAZDIYASNI ET AL.) | | |

Le présent rapport de recherche a été établi pour toutes les revendications

| Lieu de la recherche | Date d'achèvement de la recherche | Examinateur |
|---|---|---|
| La Haye | 20 novembre 90 | ZALM W.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant